# EUROPEAN PATENT APPLICATION

(11) **EP 1 710 644 A1**
(43) Date of publication of application: **11.10.2006**
(21) Application number: 06251503.6
(22) Date of filing: 21.03.2006
(51) Int. Cl.: G05B 19/409

(54) **Numerical controller**

(30) Priority: 07.04.2005 JP 2005111066
(71) Applicant: FANUC LTD, Minamitsuru-gun, Yamanashi 401-0597 (JP)
(72) Inventor: Kita, Yuki, Room 10-203, Fanuc Manshonharimomi, Minamitsuru-gun, Yamanashi, 401-0511 (JP); Arakawa, Yasuo, Minamitsuru-gun, Yamanashi 401-0511 (JP)
(74) Representative: Billington, Lawrence Emlyn

(57) **Abstract**

A numerical controller displays a plurality of blocks constituting a machining program on a screen, and sequentially carries out prior reading on the blocks, and then executes the blocks to control a machine. This numerical controller has a skip function for skipping the execution of the blocks; if there is a block to be skipped within blocks which have already been read in advance, the display attribute of the block to be skipped is changed.

## Description

### BACKGROUND OF THE INVENTION

### 1. Field of the Invention

The present invention relates to a numerical controller for controlling a machine tool and, more particularly, to a numerical controller that displays a machining program in such a way that the operator can easily see which program blocks are executed.

### 2. Description of the Related Art

Conventional numerical controllers sequentially reads blocks of machining program in advance to analyze them, and then execute the blocks to perform numerical control of a machine tool. Further, conventional numerical controllers also display machining programs comprising a plurality of blocks on a monitor. Display of a program is carried out with the same display format, for example, using the same color, font, thickness and the like, so as to maintain consistency within one program. And only the block being currently executed is displayed in a different format so that an operator can distinguish it from the other blocks.

A program includes an NC statement such as comment which is not an actual instruction requesting any action such as actual movement command and mechanical part operation command. Such an NC statements may hinder operator's confirmation of actions. To cope with this problem, in a conventional art, display format is changed by changing display colors prior to execution of program by identifying NC statements by analyzing NC statements in advance.

Another known type of numerical controller displays a tool path of a machining program for use in checking a machining program. In the tool path plotting function of this type of numerical controller, the plotted tool path may deviate from the path commanded by the machining program, depending on the setting of a block skip function or an external signal such as a mirror image signal or axis movement override signal. Therefore, when the tool path is plotted to check the machining program, external signals having an effect on the tool path are set in advance by a block skip switch or the like. Then, during execution of tool path plotting processing, it is checked whether a preset external signal relevant to block skip is in ON state or not regarding a block where a block skip symbol is read out, while reading out machining program. If determined that the external signal is in ON state, then Plotting is not carried out. If determined that the external signal is in OFF state, on the other hand, plotting is carried out (see, for example, Japanese Patent Application Laid-Open No. 60-84607).

When displaying a machining program, even if the display format of only block under execution is changed or the display color of program statements not yielding a machining action or other action is changed, such block is not distinguished from the block which includes operational commands not to be executed under certain circumstances. Some NC statements include command statement, which may be executed and may not be executed depending on external settings even though it is an operational commands. Such a command statement is a functional command and is usually attached to the head of the statement in the forms of "/" (block skip) or "/0" to "/9" (optional block skip), wherein execution of the NC statement following "/" is skipped by ON/OFF operation of manual setting switch buttons (switches of machine control panel or switches displayed on the display screen) or by programmable skip such as "/0" to "/9". As this function can be changed during execution of the program, an operator cannot confirm in advance, in some cases, whether this function is enabled or not, so that it is impossible to change the display format of the blocks concerned in advance so as to match an actual execution. For this reason, it is difficult to confirm, during the execution of a block, whether the block will be executed or not (or the block has already executed or not) by dint of its display format (e.g., color), since the display format is not distinguished as such.

Furthermore, recent CNCs read a large number of NC statements in advance due to its high-speed execution. When a block skip command is present within blocks which have already been read in advance, its operation path has already been calculated by dint of prior read function, even if the block has not been executed yet. Therefore, even if the block skip signal is changed using a machine control panel, an intended block skip operation may not be executed and the desired result may not be obtained. Thus, there is a problem that an operator cannot check whether a block has been executed or not, by looking at program display.

Some CNC programs allow conditional branches to be carried out according to movement command calculated from axis movements using calculation formulas, called macro program function, such as arithmetic operations and trigonometric functions, in which variables are used, or according to operation result. In a macro program, jump of blocks to be executed generates in response to change in operation results which constantly changes, with the result that the blocks which are not executed arises from these block jumps. However, the blocks that are not executed are conventionally displayed in the same display format as the blocks that are executed. Therefore, it is difficult for an operator to immediately check which block is to be executed next, by just looking a program display, and it is difficult to clearly determine whether a specific block will be executed or not or has been executed or not.

If machining program is checked, external signal status is set in advance, and tool path is plotted, as described in the above-mentioned Japanese Patent Application Laid-Open No. 60-84607, then it is possible to distinguish blocks to be executed from blocks not to be executed, referring to the tool path. This requires, however, a checking operation before execution of machining program. Further there is a problem that the external signal status needs to be understood and set in advance.

### SUMMARY OF THE INVENTION

The numerical controller according to the present invention reads in advance a plurality of blocks constituting a machining program sequentially, analyzes and then executes the blocks to carry out numerical control of a controlled machine. This numerical controller has a program display function for displaying the machining program including the plurality of blocks on a display, and a skip function for skipping execution of the blocks. Further, the numerical controller comprises a display attribute changing means for changing the display attribute of a block to be skipped when the block to be skipped is found within the blocks which have already been read in advance.

The skip function may include block skipping with which a specified block is skipped.

The skip function may include skipping based on a branch command in case where the machining program is described in a macro format.

The skip function may include skipping based on an optional skip command of the numerical controller.

The display attribute may be any of color, blinking, hatching, a font type, and a font size.

According to the present invention, an operator can immediately recognize blocks that are not actually executed and can confirm the fact that the CNC recognizes the content of block skips specified intentionally by the operator, thereby enabling safe and errorless machining.

The block that begins with a block skip command, which has not yet been executed and which is included in a plurality of blocks which have already been read in advance and the CNC has finished calculation of the operation path, is not recognized by the CNC as change in the block skip function, even if the operator intentionally changes the ON/OFF setting of the block skip function. In this case, however, the display format of the above block is not changed, so the operator can recognize that the block will not be skipped and working will proceed in the manner such that the operator did not intend so, thereby enabling an abnormal situation to be prevented from occurring in advance.

When executing a macro program in the dry run mode to check for program errors or when performing actual machining, the operator can immediately recognize whether a conditional branch has been correctly calculated because the display format of unexecuted blocks changes, and can easily recognize the next axis operation because the display format of the block differs from that of the others, thereby making checking and machining work efficient and safe.

### BRIEF DESCRIPTION OF THE DRAWINGS

The above and other objects and features of the present invention will become apparent from the description of the following embodiments with reference to the accompanying drawings, in which:
FIG. 1 is a block diagram indicating the main elements of a numerical controller embodying the present invention.
FIG. 2 is a flowchart illustrating the process performed by the CPU of the numerical controller in FIG. 1.
FIGs. 3A to 3C show a specific example of a machining program displayed on the monitor of the controller in FIG. 1.
FIGs. 4A to 4C are diagrams illustrating tool paths plotted for the machining program in FIGS. 3A to 3C.

### DETAILED DESCRIPTION OF THE PREFERRED EMBODIMENTS

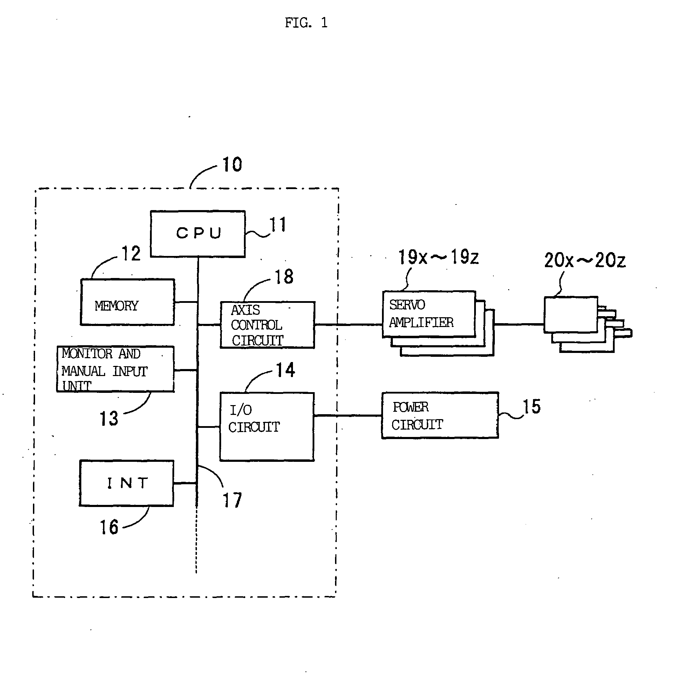

FIG. 1 is a block diagram illustrating the main elements of a numerical controller embodying the present invention. The numerical controller 10 in FIG. 1, which controls a wire electric discharge machine, is the same as a conventional numerical controller, so only an outline thereof is explained below.

The numerical controller 10 comprises a processor (CPU) 11, and a memory 12 including ROM, RAM, etc., a monitor and manual input unit 13 including a monitor such as a CRT, liquid crystal panel, or other display unit and input means such as a keyboard, machine control panel, or the like, an I/O circuit 14, an interface 16, and an axis control circuit 18 for the X, Y, and Z feed axes of a wire electric discharge machine, which are connected to the processor 11 through a bus 17.

Servo amplifiers 19x, 19y, 19z for the axes of the wire electric discharge machine are connected to the axis control circuit 18. Servo motors 20x, 20y, 20z that drive the feed axes are connected to the servo amplifiers 19x, 19y, 19z. A detector (not shown) that detects position and speed is connected to each servo motor 20x, 20y, 20z and the detected position and speed are fed back to the axis control circuit 18. In the axis control circuit 18, feedback control of the position and speed of the feed axes is performed, and the servo motors 20x, 20y, 20z are driven through servo amplifiers 19x, 19y, 19z. For example, the X-axis and Y-axis servo motors drive a table, to which a workpiece to be machined is attached, in the directions of the X-axis and Y-axis, and the Z-axis servo motor drives an upper wire guide in the direction (orthogonal to both the X- and Y- axes) of the Z-axis. For tapering, U- and V- axes for moving the upper wire guide in mutually orthogonal directions over the XY plane may be provided, but the U- and V-axes are not shown in the embodiment in FIG. 1.

A power circuit 15, which supplies a machining voltage between the wire electrode and the workpiece, is connected to the I/O circuit 14. The processor 11 outputs machining power conditions such as on-time and off-time and machining start and end commands through the I/O circuit 14 to the power circuit 15.

The memory 12 stores machining programs read through the interface 16 or machining programs or the like input by the monitor and manual input unit 13. The memory 12 also stores temporary calculation data, display data, or various data that the operator inputs with the monitor and manual input unit 13.

The above structure is the same as the structure of conventional numerical controllers for wire electric discharge machines. In addition, the numeric controller according to the present invention has features specific to this invention.

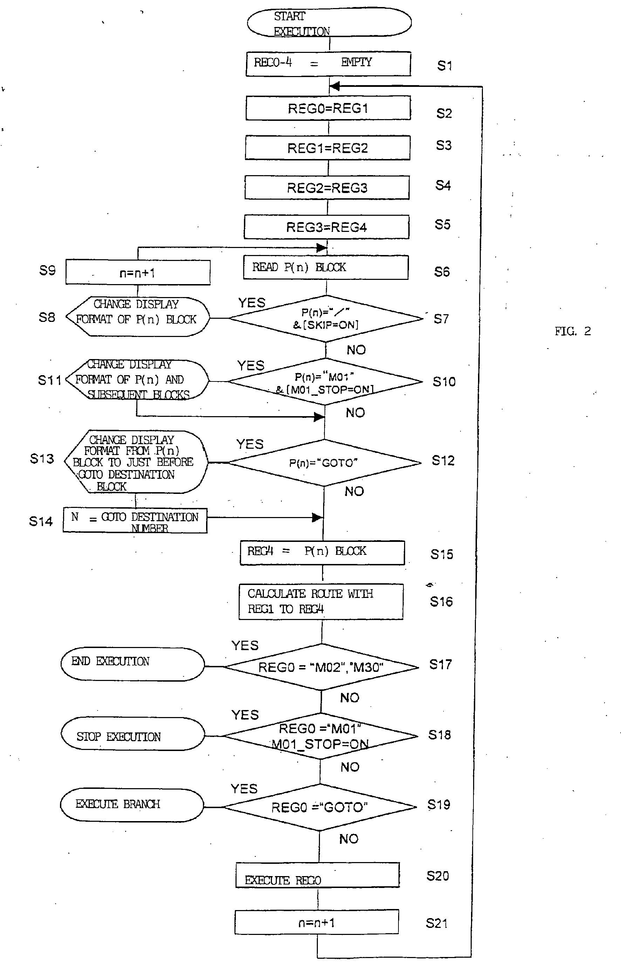

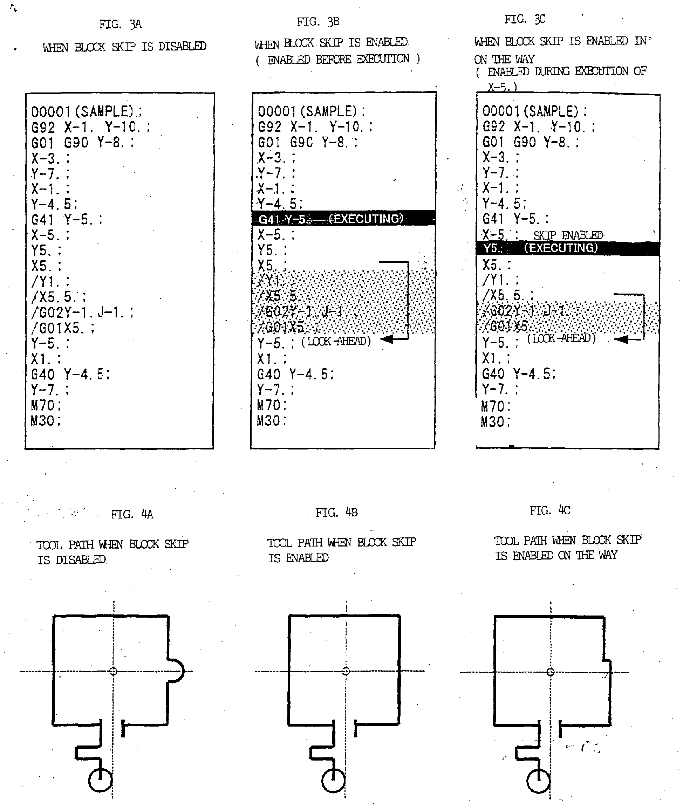

The program display process performed by the processor 11 (referred to below as the the CPU 11) of the numerical controller 10 will be described with reference to FIG. 2 and FIGs. 3A to 3C.

FIG. 2 is a flowchart illustrating the process performed by the CPU 11 during machining in this embodiment. The numerical controller 10 uses its program display function to display a machining program including a plurality of blocks on the monitor of the monitor and manual input unit 13 (hereinafter referred to simply as monitor). Numerical controller 10 has further a skip function for skipping block execution.

The program display function displays the machining program on the monitor before preprocessing is started according to a command to start machining a workpiece. FIGs. 3A to 3C show a specific example of a machining program coded in absolute coordinate system (G90) as displayed on the monitor. This machining program is used by a wire-cut electric discharge machine for machining of punching parts for molds.

FIG. 3A shows how the machining program is displayed on the monitor before being executed. For example, the first block of the machining program is "G92 X-1. Y-10. ;" and the next block is "G01 G90 Y-8. ;". The last block of the machining program is "M30;". The machining program in FIG. 3A has 20 blocks.

How the program is processed by the CPU 11 of the numerical controller 10 in this embodiment will first be described with reference to the flowchart in FIG. 2. For the sake of simplicity, the number of blocks to be read in advance for prior read operation is assumed to be four.

When execution of the program starts, in step S1, the CPU 11 clears a total of five registers; register REG0, which stores the block being executed, and REG1, REG2, REG3 and REG4, which store four blocks to be read in advance.

Next, in steps S2 to S5, the CPU 11 sequentially shifts the content of the registers to sequentially advance the execution blocks (REG0 ← REG1, REG1 ← REG2, REG2 ← REG3, REG3 ← REG4).

The following description shows how the program proceeds from the stage where the program has proceeded to a certain extent (that is, from the stage where the program has proceeded to the block indicated by block pointer "n").

The CPU 11 reads in the block indicated by block pointer "n" in step S6 and determines whether or not the block skip command "/" is present in the block in step S7. If the block skip command is absent or the block skip function is disabled (SKIP=OFF), the CPU 11 checks whether the optional stop command M01 is present or not and whether or not the optional stop function is enabled (M01_STOP=ON) in the next step S10.

If determined that the optional stop command is absent, the CPU 11 checks whether or not the branch command GOTO is present in the next step S12. If determined that the branch command is absent, the CPU. 11 stores the block (read in step S6) indicated by block pointer "n" in the above-mentioned register REG4 in the next step S15.

In step S16, a tool path is calculated from the four blocks to be read in advance, stored in registers REG1 to REG4, and further the end point of the executable command stored in register REG0, which stores the block under execution, is calculated to prepare for execution.

In step S17, the CPU 11 determines whether the content of register REG0 is one of the program execution end commands, M02 or M30. If not a program execution end command, the CPU 11 checks whether it is a program stop command or not in step S18.

If not a program stop command, the CPU 11 checks whether it is the GOTO branch command or not in step S19. If not the branch command, the CPU 11 executes the content of register REG0, which stores the block under execution, in step S20.

In step S21, the CPU 11 increments the value of the block pointer "n" by 1 (n=n+1). Next, the program returns to step S2, the CPU 11 sequentially shifts the contents of the registers that store the execution blocks (REG0 ← REG1, REG1 ← REG2, REG2 ← REG3, REG3 ← REG4) in the same way as shown above in steps S2 to S5, and reads the command indicated by the next block pointer in step S6.

In the next step S7, if the CPU determines that the block skip command "/" is present in the block read in the previous step S6 and the block skip function is enabled (SKIP=ON), the CPU 11 changes the display format of the block indicated by the block pointer "n" in the next step S8, increments the block pointer by 1 in step S9 (n=n+1), returns to step S6 again, and reads the next block.

If the CPU 11 determines that the optional stop command M01 is present and that the optional stop function is enabled (M01_STOP=ON) in step S10, it changes the display format of this block and the subsequent blocks in step S11. Processing proceeds to step S12 and then steps S15 to S18, and if the decision of processing in step S18 is YES, then stop procedure is performed.

If the CPU 11 determines that the branch command GOTO is present in step S12, it changes the display format of the blocks in the range from this block to the block just before the branch destination number given in the GOTO command in step S13, and changes the block pointer "n" to indicate the destination of the GOTO command in step S14.

As described above, in the machining program displayed on the monitor, the display format of blocks that will be skipped, from among the blocks which have already been read in advance, is changed (steps S8, S11, S13), so the operator can immediately recognize the blocks that will not actually be executed. Change in display format (display attribute) of blocks to be skipped can be realized by change in color, blinking, hatching, a font type, and a font size.

FIG. 3B shows a specific example in a case where block skip function is enabled before execution of displaying of the machining program of Fig. 3A, and the display format of the blocks to be skipped is changed when the execution block proceeds and prior read operation on four blocks ahead of the execution block is carried forward. More specifically, while the "G41Y-5." block is being executed, "/Y1.", which is four blocks ahead, is found to be a skip block. Therefore, the next block "/X5.5." is read, but this block is also found to be a skip block, so the next block is read. In this manner, prior read operation proceeds to "Y-5.", while changing the display format of the blocks from "/Y1." to "/G01x5." to indicate that they will be skipped. The display format of the blocks which will be skipped is altered by shading. From the change in the display format, the operator can recognize that the following skip blocks or non-execution blocks will not be executed (will be skipped).
"/Y1.;" (Linear interpolate to Y=1.);
"/X5.5.;" (Linear interpolate to X=5.5.);
"G02Y-1. J-1.;" (Interpolate clockwise circular to Y=-1. (X does not change) around point (X=5.5, Y=0) in the direction of (J) -1, with incremental Y;
"/G01X5.;" (Linear interpolate to X=5.);
Therefore, the operator can see that in the actual machining sequence, after "X5." (linear interpolate to X=5.) is executed, "Y-5." (linear interpolate to Y=-5.) will be executed next.

FIG. 3C shows the display format of the blocks that will be skipped when execution block has proceeded to the next block "Y5." in case where the operator changes the skip function from disabled state to enabled state during execution of "X-5.".

The block skip function was disabled when block "X-5." was executed, so the blocks from "Y5." to "/X5.5.", which includes the block skip command, has already been stored in the program storage registers 1 to 4 (REG1 to REG4) as executable commands and a path has already been calculated.

When the processing proceeds to the next execution block "Y5.", as block skip function is enabled at this time, the operator recognizes for the first time that "/G02Y-1. J-1.", the fourth block of the blocks to be read in advance, is blocks to be skipped. Since this block is to be skipped, it is not stored in register 4 (REG4) and the block pointer advances to the next block according to the procedures shown in the flowchart. Since this block, "G01X5.", also includes the block skip command, the processing proceeds to the next block "Y-5.", which is stored in register 4 (REG4).

At this stage, the display format of four blocks from "/Y1." to " /G01X5 ." which the operator originally intended to skip is not changed in the lump, but the display format of only the latter two blocks, "/G02Y-1.J-1." and "/G01X5.", is changed, as shown in Fig. 3C.

With this display format, the operator can see that the "/Y1." and " /X5.5" blocks will not be skipped (or that the intended operation will not be performed), so that machining failure due to abnormalities can be prevented in advance.

When an intended block skip is not performed, the machine is immediately stopped and reset, and then restarted so that prior read operation is executed again with the necessary setting of the block skip function. Thus, it is possible to execute intended operation using block skip functions, as a result, occurrence of machining failure can be prevent in advance.

FIG. 4A shows the tool path plotted by the machining program with the block skip function disabled as shown in FIG. 3A. FIG. 4B shows the tool path plotted by the machining program with the block skip function enabled before execution as shown in FIG. 3B.

FIG. 4C shows the tool path plotted by the machining program as shown in FIG. 3C, where the intended operation was not performed because the block skip function was enabled in the midst of program.

In this type of tool path plotting, a tool path plotted in advance before execution as shown in FIG. 4A or 4B is not changed automatically. An error is first noticed when the tool actually follows an incorrect path and the plot of the actual tool path deviates from the pre-plotted path. Therefore, prevention of occurrence of machining failure is not effective to changes in function settings on the way.

The setting of the block skip function can be changed even during execution of the machining program by turning the block skip function setting switch on or off as in the example above. A problem is that when the setting of the block skip function is changed during execution of the machining program, an intended block skip operation may be performed or not be performed so that desired results may not be obtained. That depends on which block is being executed when the setting of block skip function is changed.

The block that begins with a block skip command "/", which has not yet been executed and which is included in a plurality of blocks which has already been read in advance and the CNC has finished calculation of the operation path, is not recognized by the CNC as change in the block skip function, even if the operator intentionally changes the ON/OFF setting of the block skip function. In this case, the display format of the block containing the block skip command "/", which has already been read in advance, is not changed, so the operator can recognize that the block concerned will not be skipped and working will proceed in the manner such that the operator did not intend so, thereby enabling an abnormal situation to be prevented from occurring in advance.

When the optional stop function is enabled, the display format of all blocks not executed due to optional stop is changed, so that an operator can immediately recognize the blocks that are not actually executed.

When a machining program includes a branch command, the display format of the blocks skipped by the jump is changed. As a result, an operator can immediately see whether a conditional branch has been correctly calculated or not during actual machining or when a macro program is executed in the dry run mode to check if the program includes an error, as the display format of the blocks not executed is changed. Moreover, an operator can easily recognize the next axis movement operation, as the display format of the blocks concerned differs from others. Thus, it is possible to carry out checking operation and working operation effectively and safely.

In general cutting machine tools, the execution time for one block is very short and program display is updated quickly, so checking may be difficult. When the number of blocks to be read in advance is large and the display format is changed prior to ten blocks or so, on the other hand, recognition is possible to some degree.

The function provided by the present invention is very useful in single-step execution where blocks are executed one by one for confirmation purposes, and in machining by using a low-speed machine tool such as a wire-cut electric discharge machine, which takes five minutes or more to execute one block.

## Claims

1. A numerical controller which reads in advance a plurality of blocks constituting a machining program sequentially, analyzes and then executes the blocks to carry out numerical control of a controlled machine, wherein
the numerical controller has a program display function for displaying the machining program including the plurality of blocks on a display, and a skip function for skipping execution of the blocks; and
the numerical controller comprises a display attribute changing means for changing the display attribute of a block to be skipped when said block to be skipped is found within the blocks which have already been read in advance.

2. The numerical controller according to claim 1,
wherein said skip function includes block skipping with which a specified block is skipped.

3. The numerical controller according to claim 1 or 2,
wherein the skip function includes skipping based on a branch command in case where the machining program is described in a macro format.

4. The numerical controller according to claim 1 or 2,
wherein the skip function includes skipping based on an optional skip command of the numerical controller.

5. The numerical controller according to claim 1,
wherein the display attribute is any of color, blinking, hatching, a font type, and a font size.
